# EUROPÄISCHE PATENTSCHRIFT

(11) **EP 3 112 687 B1**
(45) Veröffentlichungstag und Bekanntmachung des Hinweises auf die Patenterteilung: **22.04.2020**
(21) Anmeldenummer: 15174408.3
(22) Anmeldetag: 29.06.2015
(51) Int. Cl.: F04D 19/04, F04D 27/00, F04D 27/02, F16K 1/00, G01P 13/00, G01F 1/00

(54) **FESTSTELLUNG DER STRÖMUNG EINES HILFSGASES, DAS IN EINE VAKUUMPUMPE GESPEIST WIRD**
DETECTION OF THE CIRCULATION OF A FLOW OF AUXILIARY GAS THAT IS SUPPLIED TO A VACUUM PUMP
DÉTECTION DE LA CIRCULATION D'UN GAZ AUXILIAIRE QUI EST INJECTÉ DANS UNE POMPE À VIDE

(43) Veröffentlichungstag der Anmeldung: 04.01.2017
(73) Patentinhaber: PFEIFFER VACUUM GMBH, 35614 Asslar (DE)
(72) Erfinder: Hofmann, Jan, 35305 Grünberg (DE); Gogol, Torsten, 35630 Ehringshausen (DE); Tatzber, Bernhard, 35305 Grünberg (DE)
(74) Vertreter: Manitz Finsterwald Patent- und Rechtsanwaltspartnerschaft mbB

(56) Entgegenhaltungen:
- WO-A1-01/75374
- WO-A1-2006/095132
- DE-A1- 2 020 756

## Beschreibung

Die vorliegende Erfindung betrifft eine Vakuumpumpe. Eine gattungsgemäße Vakuumpumpe ist aus der WO 2006 / 095 132 A1 bekannt.

Vakuumpumpen, insbesondere Turbomolekularpumpen, sind grundsätzlich bekannt. Eine Vakuumpumpe kann neben dem eigentlichen Einlass, durch den ein Prozessgas aus einem Rezipienten in die Vakuumpumpe gesogen wird, wenigstens einen weiteren Einlass aufweisen, um über einen Einlasskanal ein Gas in die Vakuumpumpe einzuleiten. Der Kanal kann dabei sowohl auf Seiten der Vakuumpumpe selbst als auch auf Seiten eines Einlassventils, das an der Vakuumpumpe angeordnet ist und den Einlass für das Gas bildet, ausgebildet sein. Eine aus dem Stand der Technik bekannte Vakuumpumpe kann beispielsweise einen Fluteinlass aufweisen, über den die Vakuumpumpe belüftet werden kann. Als weiteres Beispiel sei ein Sperrgaseinlass genannt, über den Sperrgas in die Vakuumpumpe eingeleitet werden kann, um sensible Bereiche innerhalb der Pumpe mittels des Sperrgases vor Prozessgas zu schützen. Eine Vakuumpumpe kann auch einen Schleppgaseinlass aufweisen, über welchen sogenanntes Schleppgas eingeleitet werden kann, um leichte, schwer zu pumpende Gase mittels des schwereren Schleppgases abpumpen zu können. Jeder der genannten Einlässe kann über ein entsprechendes Ventil verschließbar sein.

Bei Vakuumpumpen mit einem derartigen Einlass kann das Problem auftreten, dass der Einlass bzw. der Einlasskanal, zum Beispiel durch Staub- oder Schmutzteilchen, verstopft ist, so dass selbst bei geöffnetem Ventil keine oder nur eine unzureichende Gasströmung durch den Einlasskanal möglich ist.

Der vorliegenden Erfindung liegt die Aufgabe zugrunde, eine verbesserte Vakuumpumpe bereitzustellen, bei der auf einfache Weise festgestellt werden kann, ob in einem Einlasskanal eine Gasströmung auftritt oder unterbrochen ist. Der vorliegenden Erfindung liegt ferner die Aufgabe zugrunde, ein verbessertes Verfahren zur Überwachung einer Gasströmung durch einen Kanal einer Vakuumpumpe und/oder eines Einlassventils bereitzustellen.

Diese Aufgaben werden durch eine Vakuumpumpe mit den Merkmalen des Anspruchs 1 bzw. durch ein Verfahren mit den Merkmalen des Anspruchs 13 gelöst. Bevorzugte Ausführungsformen und Weiterbildungen der Erfindung werden in den abhängigen Ansprüchen beschrieben.

Eine erfindungsgemäße Vakuumpumpe wird von Anspruch 1 definiert.

Bei der Vakuumpumpe kann somit anhand einer jeweiligen Druckmessung an den beiden Stellen ermittelt werden, ob eine Strömung des Gases durch den Kanal vorhanden oder blockiert ist. Dadurch kann auf einfache Weise festgestellt werden, ob der Kanal, z.B. durch Staub, verstopft ist.

Bei dem Kanal handelt es sich um einen Kanal eines Ventils, welches an einem Einlass, z.B. Fluteinlass oder Sperrgaseinlass, der Vakuumpumpe angeordnet oder in diesen eingesteckt oder eingeschraubt ist.

Zur Druckmessung an der ersten Stelle und an der zweiten Stelle kann die Messeinrichtung einen ersten Drucksensor und einen zweiten Drucksensor aufweisen, wobei der erste Drucksensor an der ersten Stelle und der zweite Drucksensor an der zweiten Stelle im Kanal angeordnet ist.

Die Messeinrichtung kann dazu ausgebildet sein, anhand einer Differenz zwischen dem ersten Druck und dem zweiten Druck zu bestimmen, ob das Gas längs des Kanals strömt.

Ein Einlassventil, insbesondere für eine Vakuumpumpe, bevorzugt Turbomolekularpumpe, ist mit einem Einlass einer solchen Vakuumpumpe gekoppelt und umfasst einen Kanal, durch welchen ein Gas in die Vakuumpumpe geleitet werden kann, wobei eine Messeinrichtung vorgesehen ist, die dazu ausgebildet ist, wenigstens an einer ersten Stelle im Kanal einen ersten Druck und an einer zur ersten Stelle beabstandeten zweiten Stelle im Kanal einen zweiten Druck des im Kanal befindlichen Gases zu messen und in Abhängigkeit von dem ersten Druck und dem zweiten Druck zu bestimmen, ob das Gas längs des Kanals strömt.

Bei dem Kanal handelt es sich also um einen Kanal des Einlassventils.

Zur Druckmessung an der ersten Stelle und an der zweiten Stelle kann die Messeinrichtung einen ersten Drucksensor und einen zweiten Drucksensor aufweisen, wobei der erste Drucksensor an der ersten Stelle und der zweite Drucksensor an der zweiten Stelle im Kanal angeordnet ist.

Die Messeinrichtung kann dazu ausgebildet sein, anhand einer Differenz zwischen dem ersten Druck und dem zweiten Druck zu bestimmen, ob das Gas längs des Kanals strömt.

Die nachfolgend beschriebenen Ausführungsformen und Weiterbildungen beziehen sich auf die Vakuumpumpe mit dem Einlassventil.

Vorzugsweise ist die Messeinrichtung dazu ausgebildet, anzunehmen, dass das Gas längs des Kanals strömt, wenn der erste Druck sich vom zweiten Druck unterscheidet. Wenn das Gas entlang des Kanals strömt, so stellt sich an den beiden Messstellen, z.B. aufgrund eines Leitwerts zwischen den beiden Messstellen, eine Druckdifferenz zwischen dem ersten und dem zweiten Druck ein, anhand welcher beurteilt werden kann, dass eine Strömung des Gases vorhanden ist. Wenn keine Strömung vorhanden ist, ist diese Druckdifferenz gleich null. Die Messeinrichtung kann somit feststellen, dass eine Gasströmung vorhanden ist, wenn der erste Druck nicht gleich dem zweiten Druck ist oder - was gleichwertig dazu ist - wenn die Differenz zwischen dem ersten Druck und dem zweiten Druck ungleich null ist.

Die Messeinrichtung kann dazu ausgebildet sein, anzunehmen, dass keine Gasströmung im Kanal vorhanden ist, wenn der erste Druck gleich dem zweiten Druck ist. Die Druckdifferenz zwischen dem ersten Druck und dem zweiten Druck ist somit gleich null, wenn keine Gasströmung im Kanal vorliegt.

Die Messeinrichtung kann dazu ausgebildet sein, einen Fehler anzuzeigen oder auszugeben, wenn angenommen wird bzw. wenn die Messeinrichtung feststellt, dass keine Gasströmung im Kanal vorhanden ist.

Es kann auch definiert sein, dass bei Vorliegen einer Gasströmung der erste Druck an der ersten Stelle größer ist als der zweite Druck an der zweiten Stelle. Beispielsweise kann die erste Stelle der Strömung ausgesetzt sein, während die zweite Stelle im Schatten der Strömung steht. Falls die Messeinrichtung feststellt, dass der zweite Druck größer ist als der erste Druck, kann sie dazu ausgebildet sein, ebenfalls ein Fehlersignal auszugeben.

Der Kanal kann an der ersten Stelle und/oder an der zweiten Stelle einen vergrößerten Querschnitt aufweisen. Dadurch wird eine einfachere Druckmessung möglich.

Der Kanal kann im Bereich der ersten Stelle als eine erste Kammer und/oder im Bereich der zweiten Stelle als eine zweite Kammer ausgebildet sein. Der erste Druck kann somit in einer ersten Kammer und der zweite Druck kann somit in einer zweiten Kammer gemessen werden.

Vorzugsweise kann ein zwischen der ersten Stelle und der zweiten Stelle liegender Abschnitt des Kanals einen kleineren Querschnitt aufweisen als der Kanal an der ersten Stelle oder der zweiten Stelle.

Vorzugsweise weist der Kanalabschnitt eine Engstelle, insbesondere in Art einer Kapillare, auf.

Die erste Stelle kann beispielsweise in einer ersten Kammer und die zweite Stelle kann in einer zweiten Kammer liegen und zwischen den beiden Kammern kann der Kanalabschnitt eine Engstelle mit einem deutlich kleineren Querschnitt aufweisen. Wenn eine Gasströmung im Kanal herrscht, so stellten sich unterschiedliche Drücke in den beiden Kammern ein, über die somit die Strömung nachgewiesen werden kann. Wenn keine Strömung vorhanden ist, sind die Drücke in den beiden Kammern dagegen zumindest im Wesentlichen gleich.

Der Kanal kann eine Kammer aufweisen, in welcher sowohl die erste Stelle als auch die zweite Stelle vorgesehen ist. Der erste Druck und der zweite Druck können somit in derselben Kammer gemessen werden.

Vorzugsweise ist eine von der ersten Stelle oder der zweiten Stelle im Schatten der Gasströmung angeordnet, während die andere der ersten Stelle oder der zweiten Stelle der Gasströmung ausgesetzt ist. Wenn eine Gasströmung im Kanal vorhanden ist, so unterscheidet sich aufgrund der Lagen der beiden Stellen der erste Druck vom zweiten Druck. Somit kann eine Gasströmung mittels einer Messung des ersten und zweiten Drucks nachgewiesen werden.

Der Kanal weist vorzugsweise stromaufwärts der Messeinrichtung wenigstens eine Engstelle, insbesondere in Art einer Kapillare, auf. Die Engstelle befindet sich somit insbesondere vor der ersten Stelle und der zweiten Stelle. Durch diese Engstelle kann die Strömung des Gases durch den Kanal reduziert werden, insbesondere wenn über den Kanal Luft aus der Atmosphäre eingeleitet wird.

Bei dem Kanal handelt es sich vorzugsweise um einen Kanal zum Einbringen von Sperrgas in den Motorraum der Vakuumpumpe oder um einen Flutkanal zum Fluten der Vakuumpumpe oder um einen Kanal zum Einbringen von Schleppgas in die Vakuumpumpe.

Die Erfindung betrifft auch ein Verfahren nach Anspruch 13.

Vorzugsweise wird in Abhängigkeit von einer Differenz zwischen dem ersten Druck und dem zweiten Druck bestimmt, ob das Gas längs des Kanals strömt. Vorzugsweise wird angenommen, dass das Gas längs des Kanals strömt, wenn der erste Druck sich vom zweiten Druck unterscheidet. Bevorzugt wird angenommen, dass keine Gasströmung im Kanal vorhanden ist, wenn der erste Druck gleich dem zweiten Druck ist. Insbesondere kann ein Fehler angezeigt werden, wenn angenommen wird, dass keine Gasströmung im Kanal vorhanden ist.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Querschnittsansicht eines aus dem Stand der Technik bekannten Einlassventils,
- Fig. 7: eine Querschnittsansicht einer vorteilhaften Variante eines erfindungsgemäßen Einlassventils, und
- Fig. 8: eine Querschnittsansicht einer weiteren vorteilhaften Variante eines erfindungsgemäßen Einlassventils.

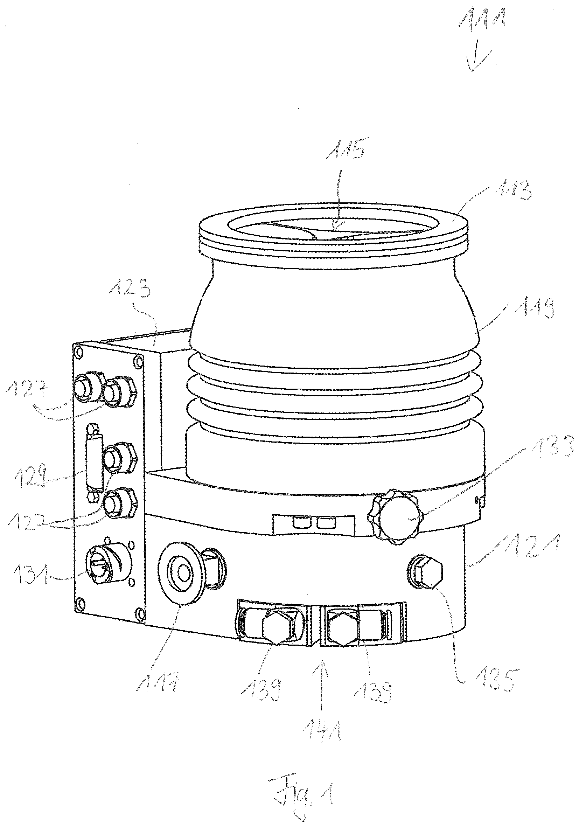

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

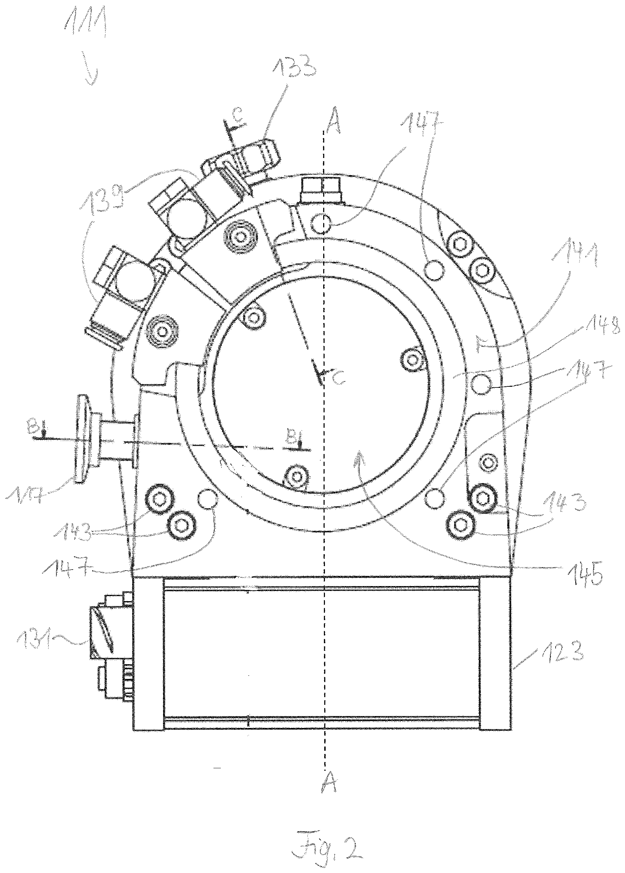

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

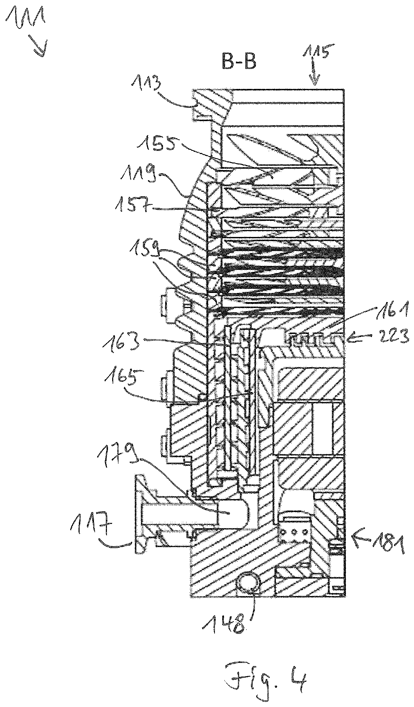

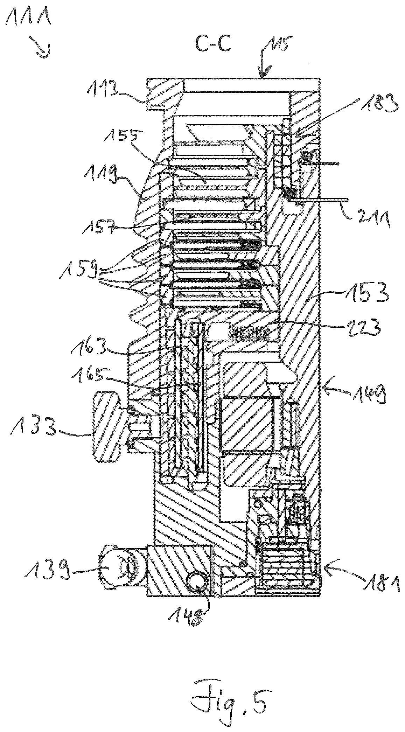

In den Figuren 2 bis 5 ist eine Kühlmittelleitung 148 dargestellt, in welcher das über die Kühlmittelanschlüsse 139 ein- und ausgeleitete Kühlmittel zirkulieren kann.

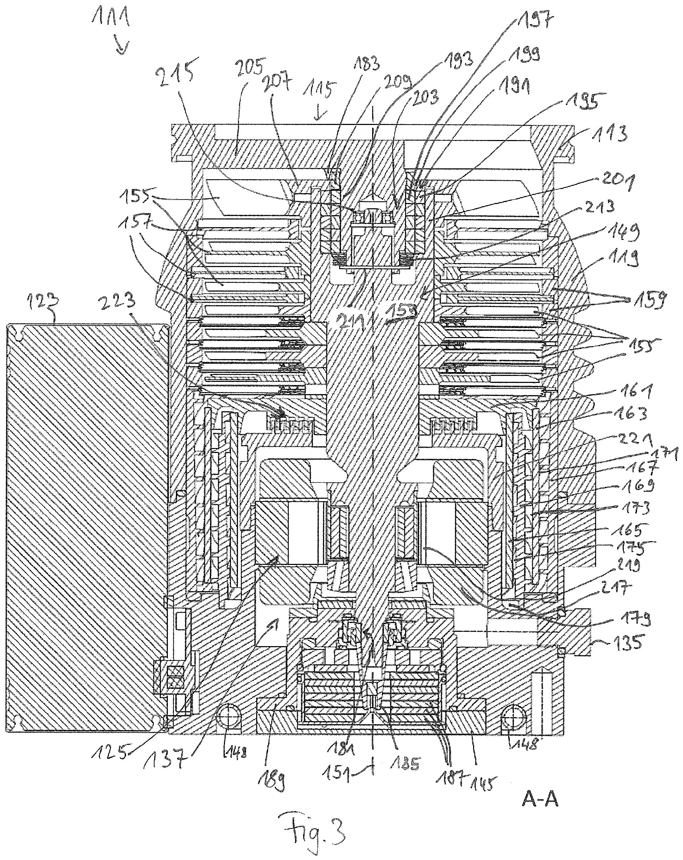

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

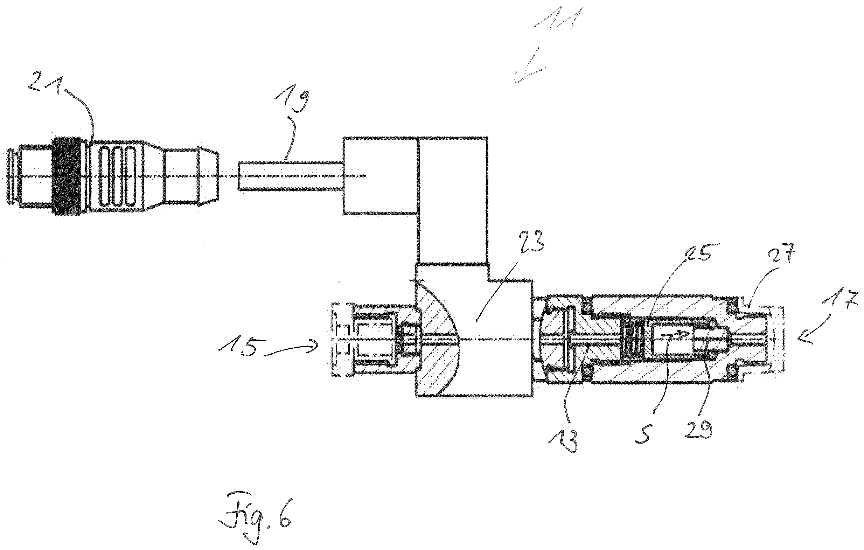

Das in Fig. 6 gezeigte Einlassventil 11 weist einen Kanal 13 auf, der sich zwischen einem Kanaleingang 15 und einem Kanalausgang 17 erstreckt. Der Kanalausgang 17 kann, wenn die in Fig. 1 gezeigte Schraube abgenommen wird, in den Sperrgasanschluss 135 eingesteckt werden, um Sperrgas in den Motorraum 137 zu leiten, das wiederum über den Pumpenauslass 117 von einer daran angeschlossenen Vorvakuumpumpe abgepumpt werden kann. Genauer kann der Kanalausgang 17 mittels eines an seiner Außenseite ausgebildeten Gewindes 27 in den Sperrgasanschluss 135 eingeschraubt werden. Durch das Sperrgas kann der Motor 125 vor Prozessgas geschützt werden. Bei dem Sperrgas kann es sich um Stickstoff handeln. Dazu kann zum Beispiel ein Stickstoffreservoir an den Kanaleingang 15 angeschlossen werden. Der Kanaleingang 15 kann auch offen gelassen werden, so dass Luft aus der Atmosphäre als Sperrgas in die Vakuumpumpe gelangen kann.

Das Einlassventil 11 weist einen elektrischen Anschluss 19 auf, an den ein elektrischer Stecker 21 angeschlossen werden kann, um ein elektrisches Ventil 23, z. B. ein Magnetventil, im Einlassventil 11 zu betätigen. Durch das Ventil 21 kann der Kanal 13 geöffnet und geschlossen werden.

Im Kanal 13 ist ferner noch ein Poralfilter 25 angeordnet. Außerdem ist ein Abschnitt des Kanals 13 in Form einer Kapillare 29, insbesondere Glaskapillare, ausgebildet. Durch die Kapillare 29 wird die Gasströmung des durch den Eingang 15 einströmenden Gases reduziert.

Problematisch bei einem derartigen Einlassventil 11 ist, dass nicht erkannt werden kann, ob tatsächlich eine Gasströmung im Kanal 13 vom Einlass 15 zum Ausgang 17, also längs der Strömungsrichtung S, vorliegt. Es kann somit nicht erfasst werden, ob bei geöffnetem Ventil 23 tatsächlich Schutzgas in die Pumpe eingeleitet wird oder ob die Strömung unterbrochen ist. Beispielsweise kann der Kanal 13 durch Staub oder Schmutz verstopft sein, so dass keine Strömung mehr durch den Kanal 13 möglich ist.

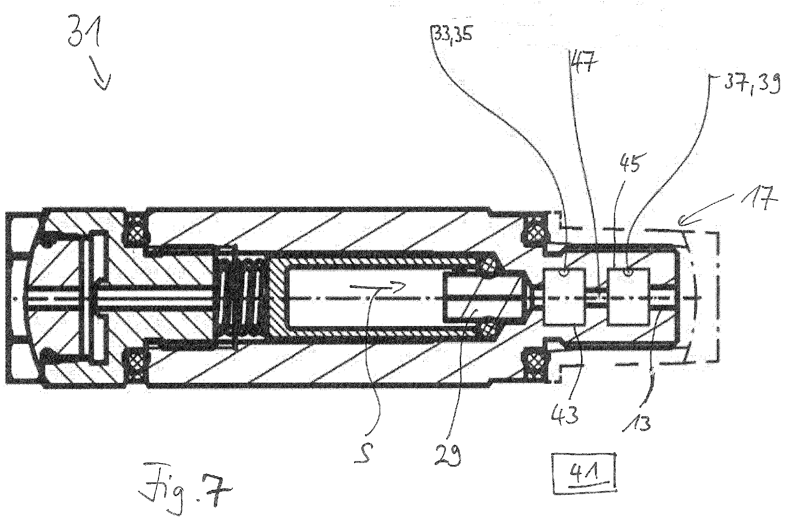

Bei dem Einlassventil 31 der Fig. 7 weist der Kanal 13 an einer ersten Stelle 33 einen ersten Drucksensor 35 und an einer zweiten Stelle 37, die von der ersten Stelle 33 beabstandet ist, einen zweiten Drucksensor 39 auf. Somit kann der Druck des Gases an der ersten Stelle 33 und an der zweiten Stelle 37 gemessen werden. Die Drucksensoren 35, 39 gehören zu einer Messeinrichtung 41, bei der es sich um einen Pumpencontroller oder dergleichen handeln kann. Die Messeinrichtung 41 ist dazu ausgebildet, bei geöffnetem Ventil 23 (vgl. Fig. 6) in Abhängigkeit von dem ersten Druck, der mit dem ersten Drucksensor 35 gemessen wird, und dem zweiten Druck, der mit dem zweiten Drucksensor 39 gemessen wird, zu bestimmen, ob Gas längs des Kanals 15 strömt.

Die Messeinrichtung 41 kann beispielsweise den ersten Druck mit dem zweiten Druck vergleichen und annehmen, dass das Gas längs des Kanals strömt, wenn der erste Druck sich vom zweiten Druck unterscheidet. Wenn der erste Druck gleich dem zweiten Druck ist, kann die Messeinrichtung 41 dagegen annehmen, dass keine Gasströmung vorhanden ist und beispielsweise eine Fehlermeldung ausgeben. Da, wie nachfolgend erläutert wird, bei einer Gasströmung der erste Druck an der ersten Stelle 33 größer ist als der zweite Druck an der zweiten Stelle 37, kann die Messeinrichtung 41 ferner einen Fehler ausgeben, wenn sie feststellt, dass der zweite Druck größer als der erste Druck ist.

Wie die Fig. 7 zeigt, weist der Kanal 13 im Bereich der ersten Stelle 33 und im Bereich der zweiten Stelle 37 einen vergrößerten Querschnitt auf, da sich die erste Stelle 33 in einer ersten Kammer 43 und die zweite Stelle 37 in einer zweiten Kammer 45 befindet. Zwischen der ersten Kammer 43 und der zweiten Kammer 45 bildet der Kanal 13 eine Engstelle 47 in Art einer Kapillare. Das Gas, welches in Strömungsrichtung S durch den Kanal 13 strömt, wird somit beim Übergang von der ersten Kammer 43 in die Engstelle 47 verblockt, was dazu führt, dass bei einer vorhandenen Gasströmung der Druck an der ersten Stelle 33 höher ist als der Druck an der zweiten Stelle 37. Durch eine Messung des ersten und des zweiten Drucks an der ersten bzw. zweiten Stelle 33, 37 kann somit, wie beschrieben, von der Messeinrichtung 41 festgestellt werden, ob bei geöffnetem Ventil tatsächlich eine Gasströmung durch den Kanal 13 vorliegt.

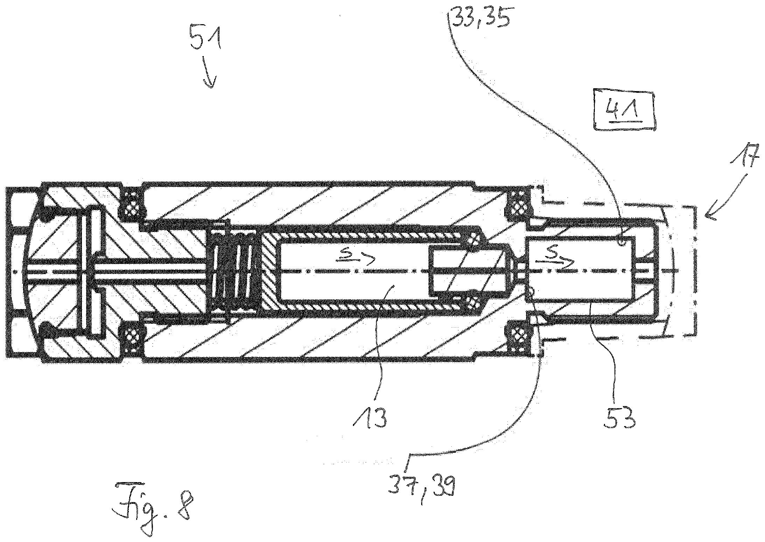

Im Unterschied zu dem Einlassventil 31 der Fig. 7 sind bei dem Einlassventil 51 der Fig. 8 die erste Stelle 33 mit dem ersten Drucksensor 35 und die zweite Stelle 37 mit dem zweiten Drucksensor 39 in einer in Strömungsrichtung S gesehen der Kapillare 29 nachgeordneten Kammer 53 angeordnet. Die zweite Stelle 39 befindet sich dabei an der Kammerwand, durch welche der in Strömungsrichtung S gesehen vorgeordnete Kanalabschnitt in die Kammer 53 mündet. Der zweite Sensor 39 befindet sich somit im Schatten der in die Kammer 53 einströmenden Gasströmung, während der erste Drucksensor 35 der Gasströmung ausgesetzt ist. Wenn somit eine Gasströmung vorliegt, misst der erste Drucksensor 35 einen ersten Druck, der höher ist als der vom zweiten Drucksensor 39 gemessene zweite Druck. Wie vorstehend mit Bezug auf Fig. 7 beschrieben wurde, kann somit die Messeinrichtung 41 in Abhängigkeit der gemessenen Drücke bestimmen, ob tatsächlich eine Gasströmung vorliegt.

Ein Einlassventil 31, 51 kann auch an den Fluteinlass 133 der Pumpe 111 angeschlossen werden, um während des Belüftens der Pumpe 111 überwachen zu können, dass tatsächlich Luft in die Pumpe 111 einströmt. Ein entsprechendes Einlassventil kann auch an einem anderen Einlass einer Pumpe vorgesehen sein.

### Bezugszeichenliste

- 11: Einlassventil
- 13: Kanal
- 15: Kanaleingang
- 17: Kanalausgang
- 19: elektrischer Anschluss
- 21: Stecker
- 23: Ventil
- 25: Poralfilter
- 27: Gewinde
- 29: Kapillare
- 31: Einlassventil
- 33: erste Stelle
- 35: erster Drucksensor
- 37: zweite Stelle
- 39: zweiter Drucksensor
- 41: Messeinrichtung
- 43: erste Kammer
- 45: zweite Kammer
- 47: Engstelle
- 51: Einlassventil
- 53: Kammer

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung

- S: Strömungsrichtung
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

- S: Strömungsrichtung

## Patentansprüche

1. Vakuumpumpe, insbesondere Turbomolekularpumpe, zum Fördern eines Prozessgases von einem ersten Einlass (115) der Vakuumpumpe (111) durch wenigstens eine Pumpstufe, insbesondere eine turbomolekulare und/oder molekulare Pumpstufe, hindurch zu einem Auslass (117) der Vakuumpumpe (111),
mit einem Einlassventil (31, 51), das an einem zweiten Einlass (133, 135) der Vakuumpumpe angeschlossen ist,
wobei das Einlassventil einen Kanal (13) aufweist, durch welchen ein von dem Prozessgas verschiedenes Gas in die Pumpe geleitet werden kann,
wobei eine Messeinrichtung (41) vorgesehen ist, die dazu ausgebildet ist, wenigstens an einer ersten Stelle (33) im Kanal (13) einen ersten Druck und an einer zur ersten Stelle (33) beabstandeten zweiten Stelle (37) im Kanal (13) einen zweiten Druck des im Kanal (13) befindlichen Gases zu messen und in Abhängigkeit von dem ersten Druck und dem zweiten Druck zu bestimmen, ob das Gas längs des Kanals (13) strömt.

2. Vakuumpumpe nach Anspruch 1,
**dadurch gekennzeichnet, dass**
die Messeinrichtung (41) dazu ausgebildet ist, anzunehmen, dass das Gas längs des Kanals (13) strömt, wenn der erste Druck sich vom zweiten Druck unterscheidet.

3. Vakuumpumpe nach Anspruch 1 oder 2,
**dadurch gekennzeichnet, dass**
die Messeinrichtung (41) dazu ausgebildet ist, anzunehmen, dass keine Gasströmung im Kanal (13) vorhanden ist, wenn der erste Druck gleich dem zweiten Druck ist.

4. Vakuumpumpe nach Anspruch 3,
**dadurch gekennzeichnet, dass**
die Messeinrichtung (41) dazu ausgebildet ist, einen Fehler anzuzeigen, wenn angenommen wird, dass keine Gasströmung im Kanal (13) vorhanden ist.

5. Vakuumpumpe nach einem der vorhergehenden Ansprüche,
**dadurch gekennzeichnet, dass**
der Kanal (13) an der ersten Stelle (33) und/oder an der zweiten Stelle (37) einen vergrößerten Querschnitt aufweist, insbesondere derart, dass der Kanal (13) im Bereich der ersten Stelle (33) eine erste Kammer (43) und/oder im Bereich der zweiten Stelle (37) eine zweite Kammer (45) ausbildet.

6. Vakuumpumpe nach einem der vorhergehenden Ansprüche,
**dadurch gekennzeichnet, dass**
ein zwischen der ersten Stelle (33) und der zweiten Stelle (37) liegender Abschnitt des Kanals (47) einen kleineren Querschnitt aufweist als der Kanal (13) an der ersten Stelle (33) oder der zweiten Stelle (37).

7. Vakuumpumpe nach Anspruch 6,
**dadurch gekennzeichnet, dass**
der Kanalabschnitt (47) eine Engstelle, insbesondere in Art einer Kapillare, aufweist.

8. Vakuumpumpe nach einem der Ansprüche 1 bis 4,
**dadurch gekennzeichnet, dass**
der Kanal (13) eine Kammer (53) aufweist, in welcher sowohl die erste Stelle (33) als auch die zweite Stelle (37) vorgesehen ist.

9. Vakuumpumpe nach einem der vorhergehenden Ansprüche,
**dadurch gekennzeichnet, dass**
eine von der ersten Stelle (33) oder der zweiten Stelle (37) in einer Kammer (53) vorgesehen ist, sich an einer Wand der Kammer (53) befindet, durch welche ein in Strömungsrichtung (S) gesehen vorgeordneter Kanalabschnitt in die Kammer (53) mündet, und somit im Schatten der Gasströmung angeordnet ist, während die andere der ersten Stelle (33) oder der zweiten Stelle (37) der Gasströmung ausgesetzt ist.

10. Vakuumpumpe nach einem der vorhergehenden Ansprüche,
**dadurch gekennzeichnet, dass**
der Kanal (13) stromaufwärts der ersten Stelle (33) und der zweiten Stelle (37) wenigstens eine Engstelle (29), insbesondere in Art einer Kapillare, aufweist.

11. Vakuumpumpe nach einem der vorhergehenden Ansprüche, **dadurch gekennzeichnet, dass**
es sich bei dem Kanal (13) um einen Kanal zum Einbringen von Sperrgas in den Motorraum (137) der Vakuumpumpe (111) oder um einen Flutkanal zum Fluten der Vakuumpumpe (111) oder um einen Kanal zum Einbringen von Schleppgas in die Vakuumpumpe (111) handelt.

12. Verfahren zum Überwachen einer Strömung eines Gases längs eines Kanals (13) eines Einlassventils (31, 51), welches an einem zweiten Einlass einer Vakuumpumpe gemäß einem der vorhergehenden Ansprüche angeschlossen ist, und durch welchen Kanal das Gas in die Pumpe (111) geleitet werden kann, wobei wenigstens an einer ersten Stelle (33) im Kanal (13) ein erster Druck und an einer zur ersten Stelle (33) beabstandeten zweiten Stelle (37) im Kanal (13) ein zweiter Druck des im Kanal (13) befindlichen Gases gemessen und in Abhängigkeit von dem ersten Druck und dem zweiten Druck bestimmt wird, ob das Gas längs des Kanals (13) strömt.

13. Verfahren nach Anspruch 12, **dadurch gekennzeichnet, dass**
in Abhängigkeit von der Differenz zwischen dem ersten Druck und dem zweiten Druck bestimmt wird, ob das Gas längs des Kanals (13) strömt.

## Claims

1. A vacuum pump, in particular a turbomolecular pump, for conveying a process gas from a first inlet (115) of the vacuum pump (111) through at least one pump stage, in particular a turbomolecular pump stage and/or a molecular pump stage, to an outlet (117) of the vacuum pump (111), said vacuum pump comprising an inlet valve (31, 51) which is connected to a second inlet (133, 135) of the vacuum pump,
wherein the inlet valve has a channel (13) through which a gas different from the process gas can be conducted into the pump; and
wherein a measuring device (41) is provided which is configured to measure a first pressure at at least a first position (33) in the channel (13) and a second pressure of the gas present in the channel (13) at a second position (37) in the channel (13) spaced apart from the first position (33) and to determine in dependence on the first pressure and the second pressure whether the gas flows along the channel (13).

2. A vacuum pump in accordance with claim 1,
**characterized in that**
the measuring device (41) is configured to assume that the gas flows along the channel (13) when the first pressure differs from the second pressure.

3. A vacuum pump in accordance with claim 1 or claim 2,
**characterized in that**
the measuring device (41) is configured to assume that no gas flow is present in the channel (13) when the first pressure is equal to the second pressure.

4. A vacuum pump in accordance with claim 3,
**characterized in that**
the measuring device (41) is configured to indicate an error if it is assumed that no gas flow is present in the channel (13).

5. A vacuum pump in accordance with any one of the preceding claims,
**characterized in that**
the channel (13) has an enlarged cross-section at the first position (33) and/or at the second position (37), in particular such that the channel (13) forms a first chamber (43) in the region of the first position (33) and/or a second chamber (45) in the region of the second position (37).

6. A vacuum pump in accordance with any one of the preceding claims,
**characterized in that**
a section of the channel (47) disposed between the first position (33) and the second position (37) has a smaller cross-section than the channel (13) at the first position (33) or at the second position (37).

7. A vacuum pump in accordance with claim 6,
**characterized in that**
the channel section (47) has a constriction, in particular in the manner of a capillary.

8. A vacuum pump in accordance with any one of the claims 1 to 4,
**characterized in that**
the channel (13) has a chamber (53) in which both the first position (33) and the second position (37) are provided.

9. A vacuum pump in accordance with any one of the preceding claims,
**characterized in that**
one of the first position (33) or the second position (37) is provided in a chamber (53) and is located at a wall of the chamber (53), through which a channel section arranged upstream viewed in the flow direction (S) opens into the chamber (53), and is thus arranged in the shadow of the gas flow, whereas the other one of the first position (33) or the second position (37) is exposed to the gas flow.

10. A vacuum pump in accordance with any one of the preceding claims,
**characterized in that**
the channel (13) has at least one constriction (29), in particular in the manner of a capillary, upstream of the first position (33) and of the second position (37).

11. A vacuum pump in accordance with any one of the preceding claims,
**characterized in that**
the channel (13) is a channel for introducing sealing gas into the motor space (137) of the vacuum pump (111), or is a flood channel for flooding the vacuum pump (111) or is a channel for introducing carrier gas into the vacuum pump (111).

12. A method of monitoring a flow of a gas along a channel (13) of an inlet valve (31, 51) which is connected to a second inlet of a vacuum pump in accordance with any one of the preceding claims and through which channel the gas can be conducted into the pump (111), wherein a first pressure is measured at at least a first position (33) in the channel (13) and a second pressure of the gas present in the channel (13) is measured at a second position (37) in the channel (13) spaced apart from the first position (33); and a determination is made in dependence on the first pressure and the second pressure whether the gas flows along the channel (13).

13. A method in accordance with claim 12,
**characterized in that**
a determination is made in dependence on the difference between the first pressure and the second pressure whether the gas flows along the channel (13).

## Revendications

1. Pompe à vide, en particulier pompe turbomoléculaire, pour transporter un gaz de traitement depuis une première entrée (115) de la pompe à vide (111) à travers au moins un étage de pompage, en particulier un étage de pompage turbomoléculaire et/ou moléculaire, jusqu'à une sortie (117) de la pompe à vide (111),
comportant une valve d'entrée (31, 51) raccordée à une seconde entrée (133, 135) de la pompe à vide,
la valve d'entrée présentant un canal (13) qui permet d'acheminer un gaz, différent du gaz de traitement, jusque dans la pompe,
dans laquelle
il est prévu un dispositif de mesure (41) qui est réalisé pour mesurer au moins à un premier emplacement (33) dans le canal (13) une première pression et pour mesurer à un second emplacement (37) espacé du premier emplacement (33) dans le canal (13) une seconde pression du gaz situé dans le canal (13) et pour déterminer si le gaz s'écoule le long du canal (13), en fonction de la première pression et de la seconde pression.

2. Pompe à vide selon la revendication 1,
**caractérisée en ce que**
le dispositif de mesure (41) est réalisé pour supposer que le gaz s'écoule le long du canal (13) lorsque la première pression diffère de la seconde pression.

3. Pompe à vide selon la revendication 1 ou 2,
**caractérisée en ce que**
le dispositif de mesure (41) est réalisé pour supposer qu'il n'y a pas d'écoulement de gaz dans le canal (13) lorsque la première pression est égale à la seconde pression.

4. Pompe à vide selon la revendication 3,
**caractérisée en ce que**
le dispositif de mesure (41) est réalisé pour afficher une erreur lorsqu'il est supposé qu'il n'y a pas d'écoulement de gaz dans le canal (13).

5. Pompe à vide selon l'une des revendications précédentes,
**caractérisée en ce que**
le canal (13) présente une section transversale agrandie au premier emplacement (33) et/ou au second emplacement (37), en particulier de telle sorte que le canal (13) forme une première chambre (43) au niveau du premier emplacement (33) et/ou une seconde chambre (45) au niveau du second emplacement (37).

6. Pompe à vide selon l'une des revendications précédentes,
**caractérisée en ce que**
un tronçon du canal (13) situé entre le premier emplacement (33) et le second emplacement (37) présente une section transversale inférieure à celle du canal (13) au premier emplacement (33) ou au second emplacement (37).

7. Pompe à vide selon la revendication 6,
**caractérisée en ce que**
le tronçon (47) du canal présente un étranglement, en particulier sous la forme d'un capillaire.

8. Pompe à vide selon l'une des revendications 1 à 4,
**caractérisée en ce que**
le canal (13) présente une chambre (53) dans laquelle sont prévus aussi bien le premier emplacement (33) que le second emplacement (37).

9. Pompe à vide selon l'une des revendications précédentes,
**caractérisée en ce que**
l'un parmi le premier emplacement (33) ou le second emplacement (37) est prévu dans une chambre (53) en étant situé sur une paroi de la chambre (53), à travers laquelle un tronçon de canal amont, vu en direction d'écoulement (S), débouche dans la chambre (53) et est donc situé à l'ombre de l'écoulement de gaz, tandis que l'autre parmi le premier emplacement (33) ou le second emplacement (37) est exposé à l'écoulement de gaz.

10. Pompe à vide selon l'une des revendications précédentes,
**caractérisée en ce que**
le canal (13) présente au moins un étranglement (29), en particulier sous la forme d'un capillaire, en amont du premier emplacement (33) et du second emplacement (37).

11. Pompe à vide selon l'une des revendications précédentes,
**caractérisée en ce que**
le canal (13) est un canal pour introduire un gaz d'arrêt dans le compartiment moteur (137) de la pompe à vide (111), ou un canal de remplissage pour remplir la pompe à vide (111) ou un canal pour introduire un gaz porteur dans la pompe à vide (111).

12. Procédé pour surveiller un écoulement de gaz le long d'un canal (13) d'une valve d'entrée (31, 51) qui est raccordée à une seconde entrée d'une pompe à vide selon l'une des revendications précédentes, ledit canal permettant d'acheminer le gaz jusque dans la pompe (111),
dans lequel
une première pression est mesurée au moins à un premier emplacement (33) dans le canal (13) et une seconde pression du gaz situé dans le canal (13) est mesurée à un second emplacement (37) espacé du premier emplacement (33) dans le canal (13), et il est déterminé si le gaz s'écoule le long du canal (13) en fonction de la première pression et de la seconde pression.

13. Procédé selon la revendication 12,
**caractérisé en ce que**
il est déterminé si le gaz s'écoule le long du canal (13) en fonction de la différence entre la première pression et la seconde pression.
